# EUROPEAN PATENT APPLICATION

(11) **EP 4 641 773 A1**
(43) Date of publication of application: **29.10.2025**
(21) Application number: 23915295.2
(22) Date of filing: 10.01.2023
(51) Int. Cl.: H01M 50/102, H01M 50/30

(54) **BATTERY CELL, BATTERY, AND ELECTRICAL DEVICE**

(71) Applicant: Contemporary Amperex Technology Co., Limited, Ningde, Fujian 352100 (CN)
(72) Inventor: CHEN, Xinxiang, Ningde, Fujian 352100 (CN); ZHENG, Yulian, Ningde, Fujian 352100 (CN); LIN, Denghua, Ningde, Fujian 352100 (CN); HUANG, Shoujun, Ningde, Fujian 352100 (CN); WANG, Peng, Ningde, Fujian 352100 (CN)
(74) Representative: Gong, Jinping
(86) International application number: PCT/CN2023/071693
(87) International publication number: WO 2024/148518

(57) **Abstract**

This application provides a battery cell, a battery, and an electric apparatus. The battery cell includes a housing and a pressure relief mechanism. The housing has a first wall and a second wall disposed opposite each other along a first direction. The housing is provided with a recess, where the recess is recessed relative to a surface of the second wall facing away from the first wall. The pressure relief mechanism is disposed on the first wall, where a projection of the pressure relief mechanism along the first direction at least partially overlaps a projection of the recess along the first direction.

## Description

### TECHNICAL FIELD

This application relates to the field of battery technology, and more specifically, to a battery cell, a battery, and an electric apparatus.

### BACKGROUND

Battery cells are widely used in electronic devices such as mobile phones, laptop computers, electric bicycles, electric vehicles, electric airplanes, electric ships, electric toy cars, electric toy ships, electric toy airplanes, and electric tools.

In the development of battery technology, how to improve the reliability of battery cells is a research direction in battery technology.

### SUMMARY

This application provides a battery cell, a battery, and an electric apparatus, which can improve reliability.

According to a first aspect, an embodiment of this application provides a battery cell including a housing and a pressure relief mechanism, where the housing has a first wall and a second wall disposed opposite each other along a first direction, and the housing is provided with a recess, the recess being recessed relative to a surface of the second wall facing away from the first wall; and the pressure relief mechanism is disposed on the first wall, where a projection of the pressure relief mechanism along the first direction at least partially overlaps a projection of the recess along the first direction.

When a plurality of battery cells are arranged along the first direction, the recess of a battery cell can avoid the pressure relief mechanism of a battery cell adjacent thereto, allowing at least some of high-temperature and high-pressure substances released by the pressure relief mechanism to enter the recess and be released outward through the recess, thereby reducing obstruction to the high-temperature and high-pressure substances by the battery cell, enabling the battery cell to relieve pressure in a timely manner, improving reliability, and reducing safety risks.

In some embodiments, the projection of the pressure relief mechanism along the first direction does not overlap a projection of the second wall along the first direction.

The second wall can avoid the pressure relief mechanism of a battery cell adjacent thereto. When the pressure relief mechanism releases high-temperature and high-pressure substances, the second wall can avoid the high-temperature and high-pressure substances, reducing obstruction to the high-temperature and high-pressure substances, enabling the battery cell to relieve pressure in a timely manner, improving reliability, and reducing safety risks.

In some embodiments, a minimum distance between the projection of the pressure relief mechanism along the first direction and the projection of the second wall along the first direction is greater than or equal to 0.5 mm.

The above technical solution can reduce the risk of the second wall obstructing the pressure relief mechanism of the battery cell adjacent thereto due to assembly errors when a plurality of battery cells are stacked along the first direction, enabling the battery cell to relieve pressure in a timely manner, improving reliability, and reducing safety risks.

In some embodiments, the projection of the pressure relief mechanism along the first direction is located within a projection of a bottom surface of the recess along the first direction.

In the first direction, the bottom surface of the recess is farther from the pressure relief mechanism of a battery cell adjacent thereto. The pressure relief mechanism disposed opposite the bottom surface of the recess along the first direction can reduce thermal shock to the housing, reducing the risk of damage to the housing under thermal shock, improving reliability, and reducing the risk of consecutive thermal runaway in a plurality of battery cells.

In some embodiments, the recess is provided on at least one side of the second wall along a second direction, where the second direction is perpendicular to the first direction.

The recess is located at an end region of the housing along the second direction. After high-temperature and high-pressure substances enter the recess, the high-temperature and high-pressure substances can be discharged from the end of the housing along the second direction, thereby reducing the risk of accumulation of the high-temperature and high-pressure substances in the recess, and improving reliability.

In some embodiments, in the second direction, a minimum distance between a projection of the pressure relief mechanism on the bottom surface of the recess and a side surface of the recess is greater than or equal to 1 mm.

The above technical solution can reduce the risk of the side surface of the recess being opposite the pressure relief mechanism of a battery cell adjacent thereto due to assembly errors when a plurality of battery cells are stacked along the first direction, thereby reducing thermal shock to the side surface of the recess, reducing the risk of damage to the housing under thermal shock, improving reliability, and reducing the risk of consecutive thermal runaway in the plurality of battery cells.

In some embodiments, the first wall includes two first edges disposed opposite each other along the second direction; and in the second direction, a minimum distance between the side surface of the recess and a first edge adjacent thereto is L1, a maximum distance between an end of the pressure relief mechanism away from the first edge adjacent thereto and the first edge is L2, and L2/L1 ≥ 0.6.

A smaller L2 leads to a smaller area of a region for pressure relief in the battery cell. A larger L1 leads to a larger dimension of the recess, a smaller internal space of the battery cell, and a smaller capacity of the battery cell. In the above technical solution, limiting the value of L2/L1 to be greater than or equal to 0.6 can balance the pressure relief velocity and space utilization of the battery cell.

In some embodiments, the recess extends through the housing along a third direction; and the first direction, the second direction, and the third direction are perpendicular to each other.

Two ends of the recess are open along the third direction. After high-temperature and high-pressure substances enter the recess, the high-temperature and high-pressure substances can be discharged from the two ends of the recess along the third direction, thereby reducing the risk of accumulation of the high-temperature and high-pressure substances in the recess, and improving reliability.

In some embodiments, the first wall includes two second edges disposed opposite each other along a third direction, and the first direction, the second direction, and the third direction are perpendicular to each other; and in the third direction, a minimum distance S3 between the pressure relief mechanism and the second edge is 2 mm to 10 mm.

A smaller S3 indicates that the pressure relief mechanism is closer to the second edge. When the second edge is subjected to external impact, the impact force transmitted to the pressure relief mechanism is greater, making the pressure relief mechanism more prone to damage and failure. A larger S3 leads a smaller dimension of the pressure relief mechanism in the third direction and a smaller pressure relief area when the pressure relief mechanism is actuated. In the embodiments of this application, limiting S3 to 2 mm to 10 mm can reduce the risk of failure of the pressure relief mechanism during normal operation of the battery cell and reduce the loss of the pressure relief area of the battery cell.

In some embodiments, a dimension of the housing along a second direction is greater than a dimension of the housing along a third direction, and the dimension of the housing along the third direction is greater than a dimension of the housing along the first direction; and the first direction, the second direction, and the third direction are perpendicular to each other.

The dimension of the housing along the first direction is small. Stacking battery cells along the first direction can balance external dimensions of a battery, improving space utilization and energy density. The first wall has a large area, allowing for more flexible position design of the pressure relief mechanism.

In some embodiments, two recesses are provided, where the two recesses are respectively located on two sides of the second wall along the second direction, and the second direction is perpendicular to the first direction; and two pressure relief mechanisms are provided, and the two pressure relief mechanisms are disposed at two ends of the first wall along the second direction.

The two pressure relief mechanisms can increase the pressure relief velocity of the battery cell, improving reliability. The two recesses can respectively avoid the two pressure relief mechanisms of the battery cell adjacent thereto, allowing the two pressure relief mechanisms to smoothly release high-temperature and high-pressure substances, thereby relieving pressure in a timely manner, improving reliability, and reducing safety risks.

In some embodiments, the first wall and the pressure relief mechanism are integrally formed, and the pressure relief mechanism includes a weak portion.

The first wall and the pressure relief mechanism being integrally formed can eliminate a process of connecting the first wall and the pressure relief mechanism and enhance the connection strength between the first wall and the pressure relief mechanism.

In some embodiments, the pressure relief mechanism includes a weak portion, and a ratio of a thickness of the weak portion to a thickness of the first wall is 0.1 to 0.4.

The above technical solution can reduce the risk of the weak portion breaking and failing during normal operation of the battery cell and allow the weak portion to break open in a timely manner when the battery cell undergoes thermal runaway.

In some embodiments, the first wall is provided with a groove, and the pressure relief mechanism includes a weak portion; and a bottom of the groove forms the weak portion.

The provision of the groove can reduce the strength of the weak portion, allowing the weak portion to break open in a timely manner when the battery cell undergoes thermal runaway. The forming method of the groove is simple. Forming the weak portion by providing the groove can simplify the forming process of the pressure relief mechanism.

In some embodiments, an angle α surrounded by the weak portion is 180° to 360°.

The weak portion may be an annular structure or a semi-annular structure. When the weak portion breaks, a region surrounded by the weak portion can be used for pressure relief. Setting α to 180° to 360° can increase a pressure relief area and improve the pressure relief velocity.

In some embodiments, the battery cell further includes an electrode terminal, where the electrode terminal is mounted in a region of the first wall surrounded by the weak portion.

When the battery cell undergoes thermal runaway, the weak portion breaks, and the region of the first wall surrounded by the weak portion flips or is ejected under the impact of high-temperature and high-pressure substances, thereby driving the electrode terminal to move, disconnecting an electrical connection between the electrode terminal and the electrode assembly, cutting off a circuit, and mitigating the thermal runaway of the battery cell.

In some embodiments, the weak portion includes a first linear segment, a second linear segment, and an arcuate segment connected between the first linear segment and the second linear segment.

Providing the arcuate segment enables a smooth transition between the first linear segment and the second linear segment, reducing stress concentration and reducing the risk of the weak portion breaking and failing during normal operation of the battery cell.

In some embodiments, a minimum distance between the arcuate segment and an edge of the first wall is D1, a minimum distance between the first linear segment and the edge of the first wall is D2, and D1 ≥ D2.

Compared to the first linear segment, the arcuate segment is more prone to damage when subjected to impact forces. In the embodiments of this application, setting D1 to be greater than or equal to D2 allows for a large distance between the arcuate segment and the edge of the first wall, thereby reducing the risk of the arcuate segment breaking and failing when the edge of the first wall is subjected to external impact.

In some embodiments, a minimum distance between the second linear segment and the edge of the first wall is D3, and D1 ≥ D3.

Compared to the second linear segment, the arcuate segment is more prone to damage when subjected to impact forces. In the embodiments of this application, setting D1 to be greater than or equal to D3 allows for a large distance between the arcuate segment and the edge of the first wall, thereby reducing the risk of the arcuate segment breaking and failing when the edge of the first wall is subjected to external impact.

In some embodiments, the first wall includes a first edge extending along a third direction, a second edge extending along a second direction, and an arcuate edge connecting the first edge and the second edge, and the first direction, the second direction, and the third direction are perpendicular to each other; the first linear segment is parallel to the first edge, the second linear segment is parallel to the second edge, and the arcuate segment is opposite the arcuate edge; and a minimum distance between the arcuate segment and the arcuate edge is greater than or equal to a distance between the first linear segment and the first edge.

The arcuate edge is located at a corner of the housing, making it more susceptible to external impact. The above technical solution allows for a large distance between the arcuate segment and the arcuate edge, thereby reducing the risk of the arcuate segment breaking and failing when the arcuate edge is subjected to external impact, and improving reliability.

In some embodiments, two first linear segments are provided, and the two first linear segments are spaced apart along the second direction, and two ends of the second linear segment along the second direction are respectively connected to the two first linear segments through two arcuate segments.

In the above technical solution, the weak portion encloses a roughly rectangular region. When the battery cell undergoes thermal runaway, the weak portion breaks to form a roughly rectangular pressure relief opening on the housing of the battery cell, thereby relieving pressure in a timely manner.

In some embodiments, the weak portion is annular and includes two first linear segments, two second linear segments, and four arcuate segments; and in a circumferential direction of the weak portion, adjacent first linear segments and second linear segments are connected by the arcuate segments.

When the battery cell undergoes thermal runaway, the weak portion breaks, and a portion of the first wall surrounded by the weak portion detaches from the battery cell, thereby reducing obstruction to high-temperature and high-pressure substances and relieving pressure in a timely manner.

In some embodiments, the housing includes a housing body and an end cap, the housing body has an opening, and the end cap is configured to cover the opening; and the end cap is the first wall, and the housing body includes the second wall, and the end cap is welded to the housing body to form a weld portion. Welding provides high connection strength and is a simple process that is easy to implement.

In some embodiments, the pressure relief mechanism includes a weak portion; and the weld portion surrounds the weak portion, and a minimum distance between the weak portion and the weld portion is 0.5 mm to 5 mm.

During welding of the housing body and the end cap, the heat generated by welding is transferred to the weak portion, causing the weak portion to be affected by thermal stress. The above technical solution can reduce the thermal stress transferred to the weak portion, reducing the risk of premature breakage and failure of the weak portion.

In some embodiments, the weak portion includes a first linear segment, a second linear segment, and an arcuate segment connected between the first linear segment and the second linear segment; and a minimum distance between the arcuate segment and the weld portion is D4, a minimum distance between the first linear segment and the weld portion is D5, and D4 ≥ D5.

Compared to the first linear segment, the arcuate segment is more prone to fatigue damage under thermal stress. In the embodiments of this application, setting D4 to be greater than or equal to D5 allows for a large distance between the arcuate segment and the weld portion, thereby reducing the risk of the arcuate segment breaking and failing under thermal stress.

In some embodiments, a minimum distance between the second linear segment and the weld portion is D6, and D4 ≥ D6.

Compared to the second linear segment, the arcuate segment is more prone to fatigue damage under thermal stress. In the embodiments of this application, setting D4 to be greater than or equal to D6 allows for a large distance between the arcuate segment and the weld portion, thereby reducing the risk of the arcuate segment breaking and failing under thermal stress.

In some embodiments, the weld portion includes a first weld segment extending along a third direction, a second weld segment extending along a second direction, and an arcuate weld segment connecting the first weld segment and the second weld segment, and the first direction, the second direction, and the third direction are perpendicular to each other; the first linear segment is parallel to the first weld segment, the second linear segment is parallel to the second weld segment, and the arcuate segment is opposite the arcuate weld segment; and a minimum distance between the arcuate segment and the arcuate weld segment is greater than or equal to a minimum distance between the first linear segment and the first weld segment.

The arcuate segment is more prone to fatigue damage under thermal stress. In the embodiments of this application, a large distance is present between the arcuate segment and the arcuate weld segment, thereby reducing the risk of the arcuate segment breaking and failing under thermal stress.

In some embodiments, D4 is 1 mm to 4 mm; and optionally, D4 is 2 mm to 3 mm.

The above technical solution allows for a large distance between the arcuate segment and the weld portion, thereby reducing the risk of the arcuate segment breaking and failing under thermal stress.

In some embodiments, D5 is 0.8 mm to 4 mm; and optionally, D5 is 1 mm to 2.5 mm.

The above technical solution allows for a large distance between the first linear segment and the weld portion, thereby reducing the risk of the first linear segment breaking and failing under thermal stress.

In some embodiments, the pressure relief mechanism includes a weak portion; and a thickness of the weak portion is T1, a weld depth of the weld portion is T2, and T1 and T2 satisfy: 0.05 ≤ T1/T2 ≤ 0.3.

The above technical solution can ensure that during thermal runaway of the battery cell, the weak portion breaks before the weld portion, achieving directional pressure relief of the battery cell, reducing the risk of separation of the housing body and the end cap, and ensuring that the strength of the weak portion meets design requirements, thereby reducing the risk of the weak portion breaking during normal operation of the battery cell.

According to a second aspect, an embodiment of this application provides a battery including a plurality of battery cells according to any one of the embodiments of the second aspect, where the plurality of battery cells are arranged along the first direction; and in the first direction, the pressure relief mechanism is opposite the recess of a battery cell adjacent thereto.

According to a third aspect, an embodiment of this application provides an electric apparatus including the battery cell according to any one of the embodiments of the second aspect, where the battery cell is configured to supply electrical energy.

### BRIEF DESCRIPTION OF DRAWINGS

To illustrate the technical solutions in the embodiments of this application more clearly, the following briefly introduces the drawings required for the embodiments of this application. Apparently, the drawings described below are merely some embodiments of this application, and persons of ordinary skill in the art can obtain other drawings based on these drawings without creative efforts.
FIG. 1 is a schematic structural diagram of a vehicle according to some embodiments of this application;
FIG. 2 is a schematic exploded view of a battery according to some embodiments of this application;
FIG. 3 is a schematic diagram of a battery according to some embodiments of this application;
FIG. 4 is a schematic front view of a battery cell according to some embodiments of this application;
FIG. 5 is a schematic side view of a battery cell according to some embodiments of this application;
FIG. 6 is an enlarged schematic view at box A in FIG. 4;
FIG. 7 is an enlarged schematic view at box B in FIG. 6;
FIG. 8 is a schematic cross-sectional view taken along line C-C in FIG. 6;
FIG. 9 is an enlarged schematic view at box D in FIG. 8;
FIG. 10 is an enlarged schematic view at circle E in FIG. 9;
FIG. 11 is a simplified schematic diagram of a weak portion of a pressure relief mechanism of a battery cell according to some embodiments of this application;
FIG. 12 is a simplified schematic diagram of a weak portion of a pressure relief mechanism of a battery cell according to some other embodiments of this application; and
FIG. 13 is an enlarged schematic view at circle F of the battery shown in FIG. 3.

In the drawings, the drawings are not drawn to actual scale.

### DESCRIPTION OF EMBODIMENTS

To make the objectives, technical solutions, and advantages of the embodiments of this application clearer, the technical solutions in the embodiments of this application are described clearly below with reference to the drawings in the embodiments of this application. Apparently, the described embodiments are only some rather than all of the embodiments of this application. Based on the embodiments in this application, all other embodiments obtained by persons of ordinary skill in the art without creative efforts fall within the protection scope of this application.

Unless otherwise defined, all technical and scientific terms used in this application have the same meanings as commonly understood by persons skilled in the technical field of this application. The terms used in the specification of this application are intended to merely describe the specific embodiments rather than to limit this application. The terms "include", "comprise", and "have" and any other variations thereof in the specification, claims and brief description of drawings of this application are intended to cover non-exclusive inclusions. In the specification, claims, or drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments.

In the description of this application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in the embodiments of this application as suitable to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between contextually associated objects.

In the embodiments of this application, the same reference signs denote the same components. For brevity, in different embodiments, detailed descriptions of the same components are omitted. It should be understood that, as shown in the drawings, dimensions such as thickness, length, and width of various components and dimensions such as thickness, length, and width of integrated devices in the embodiments of this application are merely for illustrative purposes and should not constitute any limitations on this application.

In this application, "a plurality of" means more than two (inclusive).

In the embodiments of this application, "parallel" in the embodiments of this application includes not only the absolutely parallel case but also the approximately parallel case in the conventional understanding of engineering. Likewise, "perpendicular" includes not only the absolutely perpendicular case but also the approximately perpendicular case in the conventional understanding of engineering.

In this application, a battery cell may include a lithium-ion secondary battery cell, a lithium-ion primary battery cell, a lithium-sulfur battery cell, a sodium-lithium-ion battery cell, a sodium-ion battery cell, or a magnesium-ion battery cell, which is not limited in the embodiments of this application. The battery cell may be cylindrical, flat, cuboid, or of other shapes, which is not limited in the embodiments of this application either.

A battery mentioned in the embodiments of this application is a single physical module that includes one or more battery cells for providing a higher voltage and capacity. For example, the battery mentioned in this application may be a battery module or a battery pack. The battery typically includes a box for encapsulating one or more battery cells. The box can prevent liquids or other foreign matter from affecting the charging or discharging of the battery cell.

The battery cell includes an electrode assembly and an electrolyte. The electrode assembly includes a positive electrode plate, a negative electrode plate, and a separator. The operation of the battery cell mainly relies on the migration of metal ions between the positive electrode plate and the negative electrode plate. The positive electrode plate includes a positive electrode current collector and a positive electrode active material layer, where the positive electrode active material layer is applied on a surface of the positive electrode current collector. The positive electrode current collector includes a positive electrode current collecting portion and a positive electrode tab, where the positive electrode current collecting portion is coated with the positive electrode active material layer, and the positive electrode tab is not coated with the positive electrode active material layer. When a lithium-ion battery cell is used as an example, the positive electrode current collector may be made of aluminum, the positive electrode active material layer includes a positive electrode active material, and the positive electrode active material may be lithium cobaltate, lithium iron phosphate, ternary lithium, lithium manganate, or the like. The negative electrode plate includes a negative electrode current collector and a negative electrode active material layer. The negative electrode active material layer is applied on a surface of the negative electrode current collector. The negative electrode current collector includes a negative electrode current collecting portion and a negative electrode tab. The negative electrode current collecting portion is coated with the negative electrode active material layer, and the negative electrode tab is not coated with the negative electrode active material layer. The negative electrode current collector may be made of copper, the negative electrode active material layer includes a negative electrode active material, and the negative electrode active material may be carbon, silicon, or the like. The material of the separator may be PP (polypropylene, polypropylene), PE (polyethylene, polyethylene) or the like.

The battery cell may further include a housing, where the housing has an accommodating cavity, and the electrode assembly and the electrolyte are accommodated in the accommodating cavity. The housing can protect the electrode assembly, reducing the risk of other foreign objects affecting the electrode assembly.

The development of battery technology needs to consider multiple design factors simultaneously, such as energy density, cycle life, discharge capacity, charge-discharge rate, and other performance parameters. Additionally, the reliability of the battery needs to be considered.

A pressure relief mechanism on the battery cell has a significant impact on the reliability of the battery cell. For example, when a short circuit, overcharge, or other phenomena occur, thermal runaway may occur inside the battery cell, causing a sudden increase in pressure. In such cases, actuating the pressure relief mechanism can release the internal pressure outward to prevent the battery cell from exploding or catching fire.

The pressure relief mechanism refers to an element or component that is actuated to release internal pressure when the internal pressure of the battery cell reaches a predetermined threshold. The threshold design varies according to different design requirements. The threshold may depend on the materials of one or more of the positive electrode plate, negative electrode plate, electrolyte, and separator in the battery cell.

The pressure relief mechanism may take forms such as an explosion-proof valve, a gas valve, a pressure relief valve, or a safety valve, and may specifically adopt a pressure-sensitive element or structure. That is, when the internal pressure of the battery cell reaches the predetermined threshold, the pressure relief mechanism performs an action, or a weak region provided in the pressure relief mechanism breaks, thereby forming an opening or channel for releasing the internal pressure. Alternatively, the pressure relief mechanism may also adopt a temperature-sensitive element or structure, that is, when the internal temperature of the battery cell reaches a predetermined threshold, the pressure relief mechanism performs an action, thereby forming an opening or channel for releasing the internal pressure.

The term "actuation" mentioned in this application refers to that the pressure relief mechanism performs an action or is activated to a certain state, thereby allowing the internal pressure of the battery cell to be released. The action produced by the pressure relief mechanism may include but is not limited to at least a portion of the pressure relief mechanism breaking, shattering, being torn, or being opened. When the pressure relief mechanism is actuated, high-temperature and high-pressure substances inside the battery cell are discharged as emissions from the actuated portion. In this way, the battery cell can relieve pressure under controllable pressure, thereby avoiding potentially more serious accidents.

The emissions from the battery cell mentioned in this application include but are not limited to the electrolyte, dissolved or split positive and negative electrode plates, fragments of the separator, high-temperature and high-pressure gases produced by reactions, flames, and the like.

In the related art, a plurality of battery cells of a battery are typically arranged sequentially. A battery cell may obstruct a pressure relief mechanism of a battery cell adjacent thereto. When the pressure relief mechanism relieves pressure, the emissions are obstructed by the battery cell, resulting in low pressure relief efficiency and causing safety hazards.

In view of this, the embodiments of this application provide a technical solution where a recess is provided on a housing of a battery cell to avoid a pressure relief mechanism of a battery cell adjacent thereto, reducing obstruction to high-temperature and high-pressure substances released by the pressure relief mechanism, enabling the battery cell to relieve pressure in a timely manner, and improving reliability.

The technical solution described in the embodiments of this application is applicable to batteries and electric apparatuses using a battery.

The electric apparatus may be a vehicle, a mobile phone, a portable device, a laptop computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, or an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, or an electric planer. The foregoing electric apparatus is not particularly limited in the embodiments of this application.

For ease of description, the electric apparatus being a vehicle is used as an example for description of the following embodiments.

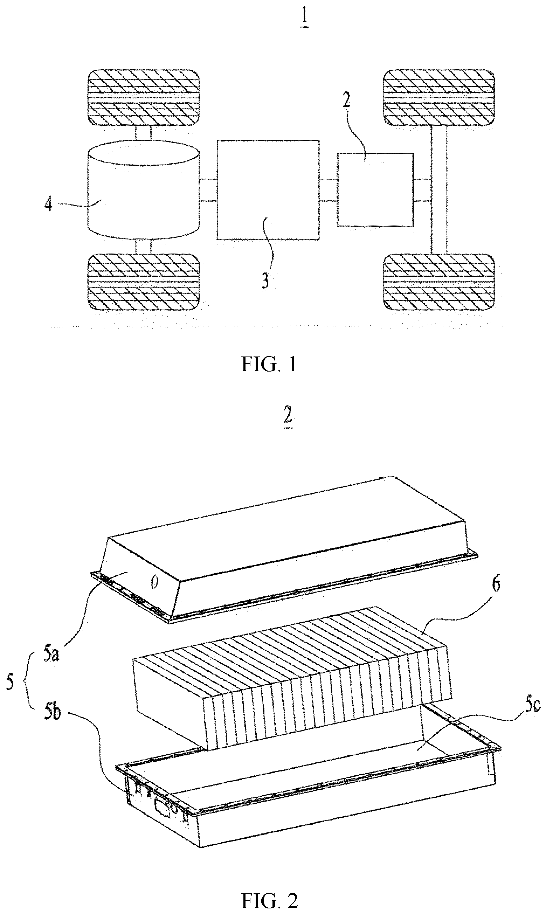

FIG. 1 is a schematic structural diagram of a vehicle according to some embodiments of this application.

As shown in FIG. 1, a battery 2 is disposed inside the vehicle 1, where the battery 2 may be disposed at the bottom, front, or rear of the vehicle 1. The battery 2 may be configured to supply power to the vehicle 1. For example, the battery 2 may serve as an operational power source for the vehicle 1.

The vehicle 1 may further include a controller 3 and a motor 4, where the controller 3 is configured to control the battery 2 to supply power to the motor 4, for example, to satisfy power needs of start, navigation, and driving of the vehicle 1.

In some embodiments of this application, the battery 2 can be used not only as the operational power source for the vehicle 1 but also as a driving power source for the vehicle 1, replacing or partially replacing fossil fuel or natural gas to provide driving traction for the vehicle 1.

FIG. 2 is a schematic exploded view of a battery according to some embodiments of this application.

As shown in FIG. 2, the battery 2 includes a box 5 and a battery cell 6 (not shown), where the battery cell 6 is accommodated in the box 5.

The box 5 is configured to accommodate the battery cell 6, and the box 5 may have various structures. In some embodiments, the box 5 may include a first box portion 5a and a second box portion 5b. The first box portion 5a and the second box portion 5b fit together such that the first box portion 5a and the second box portion 5b jointly define an accommodating space 5c for accommodating the battery cell 6. The second box portion 5b may be a hollow structure with an opening at one end, the first box portion 5a may be a plate-shaped structure, and the first box portion 5a covers the opening side of the second box portion 5b to form the box 5 having the accommodating space 5c. Alternatively, the first box portion 5a and the second box portion 5b may each be a hollow structure with an opening at one side, and the opening side of the first box portion 5a is engaged with the opening side of the second box portion 5b to form the box 5 having the accommodating space 5c. Certainly, the first box portion 5a and the second box portion 5b may each be of various shapes, such as a cylinder or a cuboid.

To improve airtightness after the connection of the first box portion 5a and the second box portion 5b, a sealing member, such as sealing gum or a sealing ring, may alternatively be disposed between the first box portion 5a and the second box portion 5b.

Assuming that the first box portion 5a fits on a top of the second box portion 5b, the first box portion 5a may also be referred to as an upper box part, and the second box portion 5b may also be referred to as a lower box part.

In the battery 2, one or more battery cells 6 may be provided. If a plurality of battery cells 6 are provided, the plurality of battery cells 6 may be connected in series, parallel, or series-parallel, where being connected in series-parallel means a combination of series and parallel connections of the plurality of battery cells 6. The plurality of battery cells 6 may be directly connected in series, parallel, or series-parallel, and then an entirety of the plurality of battery cells 6 is accommodated in the box 5. Certainly, the plurality of battery cells 6 may be first connected in series, parallel, or series-parallel to form a battery module, and then a plurality of battery modules are connected in series, parallel, or series-parallel to form an entirety which is accommodated in the box 5.

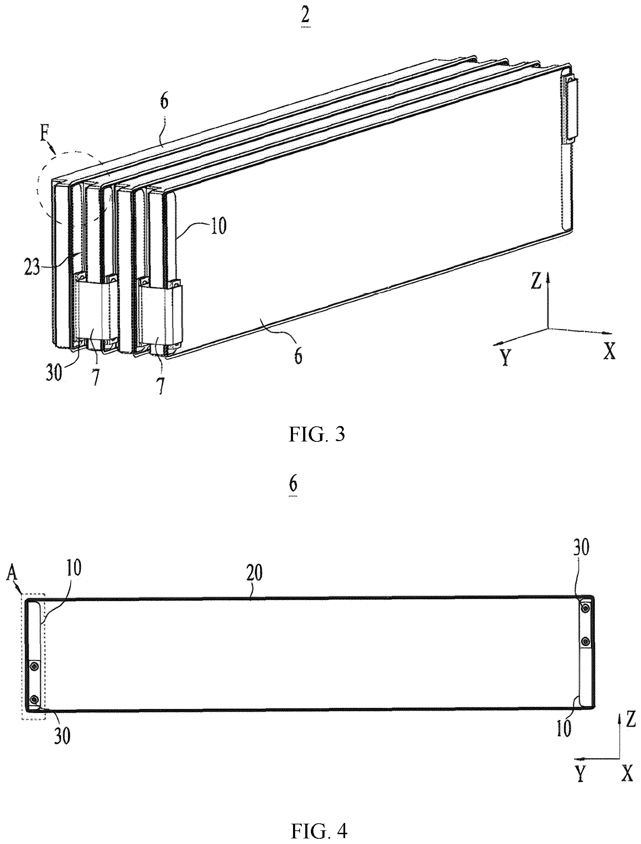

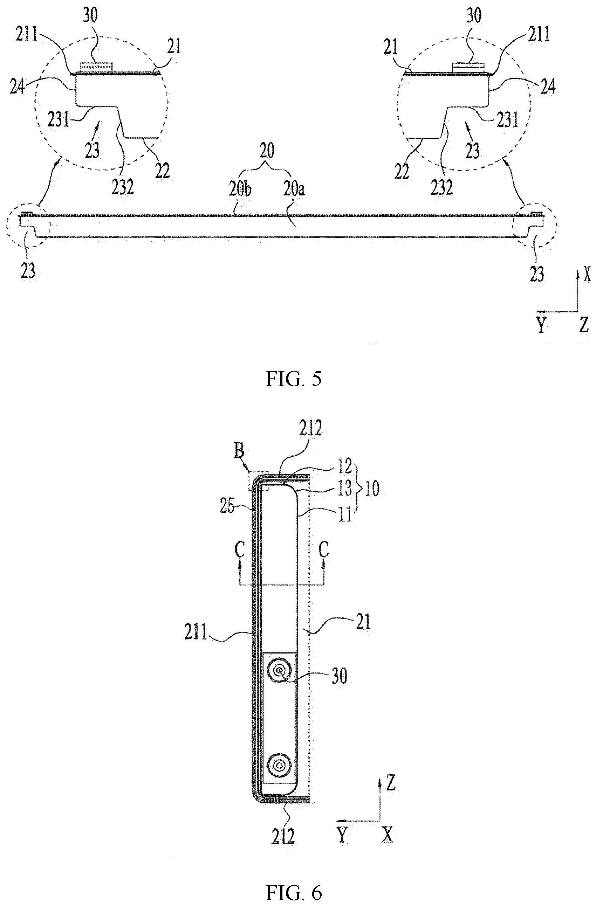

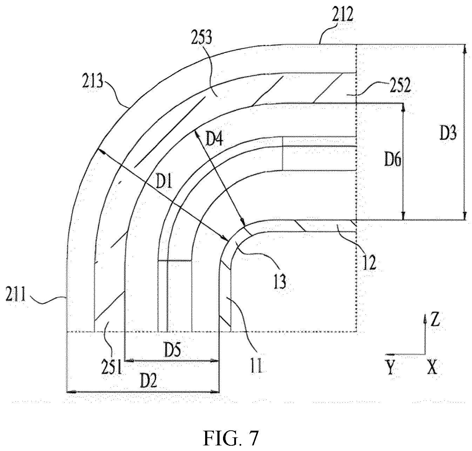

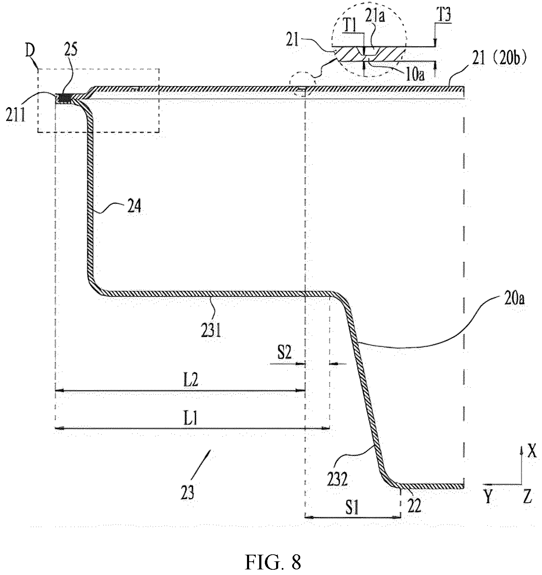

FIG. 3 is a schematic diagram of a battery according to some embodiments of this application. FIG. 4 is a schematic front view of a battery cell according to some embodiments of this application. FIG. 5 is a schematic side view of a battery cell according to some embodiments of this application. FIG. 6 is an enlarged schematic view at box A in FIG. 4. FIG. 7 is an enlarged schematic view at box B in FIG. 6. FIG. 8 is a schematic cross-sectional view taken along line C-C in FIG. 6.

Referring to FIG. 3 to FIG. 8, a battery cell 6 according to embodiments of this application includes a housing 20 and a pressure relief mechanism 10. The housing 20 has a first wall 21 and a second wall 22 disposed opposite each other along a first direction X. The housing 20 is provided with a recess 23, where the recess 23 is recessed relative to a surface of the second wall 22 facing away from the first wall 21. The pressure relief mechanism 10 is disposed on the first wall 21, where a projection of the pressure relief mechanism 10 along the first direction X at least partially overlaps a projection of the recess 23 along the first direction X.

The housing 20 is a hollow structure, with a cavity formed inside. For example, the cavity may be configured to accommodate an electrode assembly of the battery cell 6. The shape of the housing 20 may be determined based on a specific shape of the electrode assembly. For example, if the electrode assembly is a cuboid structure, a cuboid housing may be used; and if the electrode assembly is a cylindrical structure, a cylindrical housing may be used.

The housing 20 may be made of various materials, for example, the housing 20 may be made of metal or plastic. Optionally, the housing 20 may be made of copper, iron, aluminum, steel, aluminum alloy, or the like.

The first wall 21 is a wall of the housing 20 with a certain thickness. The first wall 21 may be a top wall of the housing 20, a bottom wall of the housing 20, or a side wall of the housing 20, which is not limited in the embodiments of this application. The second wall 22 is also a wall of the housing 20 with a certain thickness. The first wall 21 and the second wall 22 are spaced apart in the first direction X.

The shape of the first wall 21 and the shape of the second wall 22 are not limited in the embodiments. For example, the first wall 21 may be a planar structure, a curved structure, or another structure. The second wall 22 may be a planar structure, a curved structure, or another structure.

The positions and the number of the recesses 23 are not limited in the embodiments of this application. For example, there may be one or more recesses 23.

The recess 23 is recessed toward the first wall 21 relative to the surface of the second wall 22 facing away from the first wall 21. For example, in the first direction X, a bottom surface 231 of the recess is closer to the first wall 21 than the second wall 22.

The forming method of the pressure relief mechanism 10 and the first wall 21 is not limited in the embodiments of this application. In some examples, the pressure relief mechanism 10 and the first wall 21 are independently formed components, where the two may be connected by welding, bonding, or other methods. For example, the first wall 21 is provided with a pressure relief hole, where the pressure relief hole running through the first wall 21, and the pressure relief mechanism 10 is mounted on the first wall 21 and covers the pressure relief hole to separate the spaces of inner and outer sides of the first wall 21. In alternative embodiments, the pressure relief mechanism 10 and the first wall 21 may alternatively be an integrally formed structure.

In some examples, a portion of the projection of the pressure relief mechanism 10 along the first direction X is located within the projection of the recess 23 along the first direction X. In other examples, the entire projection of the pressure relief mechanism 10 along the first direction X is located within the projection of the recess 23 along the first direction X.

In the embodiments of this application, when a plurality of battery cells 6 are arranged along the first direction X, the recess 23 of one battery cell 6 can avoid the pressure relief mechanism 10 of a battery cell 6 adjacent thereto, allowing at least some of high-temperature and high-pressure substances released by the pressure relief mechanism 10 to enter the recess 23 and be released outward through the recess 23, thereby reducing obstruction to the high-temperature and high-pressure substances by the battery cell 6, enabling the battery cell 6 to relieve pressure in a timely manner, improving reliability, and reducing safety risks.

In some embodiments, the battery cell 6 includes an electrode assembly (not shown), where the electrode assembly is accommodated in the housing 20.

The electrode assembly includes a first electrode plate and a second electrode plate with opposite polarities. One of the first electrode plate and the second electrode plate is a positive electrode plate, and the other is a negative electrode plate. For example, the electrode assembly generates electrical energy through oxidation and reduction reactions during the intercalation/deintercalation of ions in the positive electrode plate and the negative electrode plate.

Optionally, the electrode assembly further includes a separator, where the separator is configured to insulate and isolate the first electrode plate and the second electrode plate.

The electrode assembly may be a wound structure formed by winding the first electrode plate, the separator, and the second electrode plate. The electrode assembly may alternatively be a laminated structure formed by stacking the first electrode plate, the separator, and the second electrode plate.

There may be one or more electrode assemblies. When a plurality of electrode assemblies are provided, the plurality of electrode assemblies may be stacked. For example, the plurality of electrode assemblies may be stacked along the first direction X.

In some embodiments, the housing 20 includes a housing body 20a and an end cap 20b, where the housing body 20a has an opening, and the end cap 20b is configured to cover the opening.

The housing body 20a is a component configured to cooperate with the end cap 20b to form an internal cavity of the battery cell 6, where the formed internal cavity may be configured to accommodate the electrode assembly, electrolyte, and other components.

The housing body 20a and the end cap 20b may be independent components. For example, an opening may be provided on the housing body 20a, and the end cap 20b covers the opening to form the internal cavity of the battery cell 6.

The housing body 20a may have various shapes and dimensions, such as a cuboid, a cylinder, or a hexagonal prism. Specifically, the shape of the housing body 20a may be determined based on the specific shape and dimension of the electrode assembly. The material of the housing body 20a may be various, such as copper, iron, aluminum, stainless steel, or aluminum alloy, which is not particularly limited in the embodiments of this application.

The shape of the end cap 20b may be adapted to the shape of the housing body 20a to fit the housing body 20a. Optionally, the end cap 20b may be made of a material with a certain hardness and strength (such as aluminum alloy), so that the end cap 20b is less likely to deform when subjected to extrusion or collision, enabling the battery cell 6 to have higher structural strength and improved reliability.

The housing body 20a may be a structure with an opening on one side, and one end cap 20b is provided and covers the opening of the housing body 20a. In some examples, one of the first wall 21 and the second wall 22 is the end cap 20b, and the other is a bottom wall of the housing body 20a opposite the end cap 20b. In other examples, the first wall 21 and the second wall 22 are two side walls of the housing body 20a disposed opposite each other.

Alternatively, the housing body 20a may be a structure with openings on two sides, and two end caps 20b are provided, where the two end caps 20b respectively cover the two openings of the housing body 20a. In some examples, the first wall 21 and the second wall 22 are the two end caps 20b, respectively. In other examples, the first wall 21 and the second wall 22 are two side walls of the housing body 20a disposed opposite each other.

The end cap 20b is connected to the housing body 20a by welding, bonding, snapping, or other methods.

In some embodiments, a dimension of the housing 20 along a second direction Y is greater than a dimension of the housing 20 along a third direction Z, and the dimension of the housing 20 along the third direction Z is greater than a dimension of the housing 20 along the first direction X. The first direction X, the second direction Y, and the third direction Z are perpendicular to each other.

The dimension of the housing 20 along the first direction X is small. Stacking battery cells 6 along the first direction X can balance external dimensions of a battery, improving space utilization and energy density.

The first wall 21 has a large area, allowing for more flexible position design of the pressure relief mechanism 10.

In some embodiments, the projection of the pressure relief mechanism 10 along the first direction X does not overlap the projection of the second wall 22 along the first direction X.

In the embodiments of this application, the second wall 22 can avoid the pressure relief mechanism 10 of a battery cell 6 adjacent thereto. When the pressure relief mechanism 10 releases high-temperature and high-pressure substances, the second wall 22 can avoid the high-temperature and high-pressure substances, reducing obstruction to the high-temperature and high-pressure substances, enabling the battery cell 6 to relieve pressure in a timely manner, improving reliability, and reducing safety risks.

In some embodiments, a minimum distance S1 between the projection of the pressure relief mechanism 10 along the first direction X and the projection of the second wall 22 along the first direction X is greater than or equal to 0.5 mm.

The embodiments of this application can reduce the risk of the second wall 22 obstructing the pressure relief mechanism 10 of the battery cell 6 adjacent thereto due to assembly errors when a plurality of battery cells 6 are stacked along the first direction X, enabling the battery cell 6 to relieve pressure in a timely manner, improving reliability, and reducing safety risks.

Optionally, S1 is 0.5 mm, 1 mm, 2 mm, or 5 mm.

In some embodiments, the projection of the pressure relief mechanism 10 along the first direction X is located within the projection of the recess 23 along the first direction X.

The projection of the recess 23 along the first direction X includes a projection of the bottom surface 231 of the recess along the first direction X and a projection of a side surface 232 of the recess along the first direction X.

In some embodiments, the projection of the pressure relief mechanism 10 along the first direction X is located within the projection of the bottom surface 231 of the recess along the first direction X.

In the first direction X, the bottom surface 231 of the recess is farther from the pressure relief mechanism 10 of a battery cell 6 adjacent thereto. In the embodiments of this application, the pressure relief mechanism 10 disposed opposite the bottom surface 231 of the recess along the first direction X can reduce thermal shock to the housing 20, reducing the risk of damage to the housing 20 under thermal shock, improving reliability, and reducing the risk of consecutive thermal runaway in a plurality of battery cells 6.

In some embodiments, in the second direction Y, a minimum distance S2 between a projection of the pressure relief mechanism 10 on the bottom surface 231 of the recess and the side surface 232 of the recess is greater than or equal to 1 mm.

The embodiments of this application can reduce the risk of the side surface 232 of the recess being opposite the pressure relief mechanism 10 of a battery cell 6 adjacent thereto due to assembly errors when a plurality of battery cells 6 are stacked along the first direction X, thereby reducing thermal shock to the side surface 232 of the recess, reducing the risk of damage to the housing 20 under thermal shock, improving reliability, and reducing the risk of consecutive thermal runaway in the plurality of battery cells 6.

In some embodiments, S2 ≥ 2 mm. Optionally, S2 is 2 mm, 3 mm, or 5 mm.

In some embodiments, the recess 23 is provided on at least one side of the second wall 22 along the second direction Y, where the second direction Y is perpendicular to the first direction X.

The housing 20 may be provided with the recess 23 on one side of the second wall 22 along the second direction Y or may be provided with recesses 23 on two sides of the second wall 22 along the second direction Y.

The recess 23 is located at an end region of the housing 20 along the second direction Y. After high-temperature and high-pressure substances enter the recess 23, the high-temperature and high-pressure substances can be discharged from the end of the housing 20 along the second direction Y, thereby reducing the risk of accumulation of the high-temperature and high-pressure substances in the recess 23, and improving reliability.

In some embodiments, an end of the housing 20 along the second direction Y is provided with a third wall 24, and the recess 23 extends to the third wall 24 along the second direction Y. In other words, in the second direction Y, the recess 23 is recessed relative to the third wall 24.

In some embodiments, the recess 23 extends through the housing 20 along the third direction Z, where the first direction X, the second direction Y, and the third direction Z are perpendicular to each other.

Two ends of the recess 23 are open along the third direction Z. After high-temperature and high-pressure substances enter the recess 23, the high-temperature and high-pressure substances can be discharged from the two ends of the recess 23 along the third direction Z, thereby reducing the risk of accumulation of the high-temperature and high-pressure substances in the recess 23, and improving reliability.

In some embodiments, two recesses 23 are provided, where the two recesses 23 are respectively located on two sides of the second wall 22 along the second direction Y, and the second direction Y is perpendicular to the first direction X.

The two recesses 23 can be both configured to avoid the pressure relief mechanism 10 of a battery cell 6 adjacent thereto, making the arrangement of the battery cells 6 more flexible and facilitating the connection and grouping of a plurality of battery cells 6.

In some embodiments, two pressure relief mechanisms 10 are provided, where the two pressure relief mechanisms 10 are disposed at two ends of the first wall 21 along the second direction Y.

The two pressure relief mechanisms 10 can increase the pressure relief velocity of the battery cell 6, improving reliability. The two recesses 23 can respectively avoid the two pressure relief mechanisms 10 of the battery cell 6 adjacent thereto, allowing the two pressure relief mechanisms 10 to smoothly release high-temperature and high-pressure substances, thereby relieving pressure in a timely manner, improving reliability, and reducing safety risks.

In some embodiments, the first wall 21 and the pressure relief mechanism 10 are integrally formed, and the pressure relief mechanism 10 includes a weak portion 10a.

The strength of the weak portion 10a is less than the strength of the first wall 21, and the weak portion 10a is a portion that is prone to breaking, shattering, being torn, or being opened.

In some examples, a groove, an indentation, or an other structure may be provided in a predetermined region of the first wall 21 to reduce the local strength of the first wall 21, thereby forming the weak portion 10a on the first wall 21. For example, the predetermined region of the first wall 21 is thinned, and the thinned portion of the first wall 21 forms the weak portion 10a. In other examples, a material treatment may be performed on the predetermined region of the first wall 21 to make the strength of this region weaker than that of other regions, in other words, this region is the weak portion 10a.

The pressure relief mechanism 10 may entirely be the weak portion 10a or may have only a partial region as the weak portion 10a.

The first wall 21 and the pressure relief mechanism 10 being integrally formed can eliminate a process of connecting the first wall 21 and the pressure relief mechanism 10 and enhance the connection strength between the first wall 21 and the pressure relief mechanism 10.

In some embodiments, the pressure relief mechanism 10 includes a weak portion 10a, where a ratio of a thickness T1 of the weak portion 10a to a thickness T3 of the first wall 21 is 0.1 to 0.4.

In the embodiments of this application, limiting the value of T1/T3 to be 0.1 to 0.4 can reduce the risk of the weak portion 10a breaking and failing during normal operation of the battery cell 6 and allow the weak portion 10a to break open in a timely manner when the battery cell 6 undergoes thermal runaway.

For example, if the value of T1/T3 is too small, such as less than 0.1, the strength of the weak portion 10a is low, and when the battery cell 6 is subjected to impacts such as vibration, the weak portion 10a may be at risk of fatigue damage, leading to premature failure of the pressure relief mechanism 10 and causing safety hazards. If the value of T1/T3 is too large, such as greater than 0.4, the strength of the weak portion 10a is high, and when the battery cell 6 undergoes thermal runaway, the pressure required to break the weak portion 10a is high, leading to the risk of the weak portion 10a not breaking open in a timely manner.

In some embodiments, the value of T1/T3 is 0.1, 0.2, 0.3, or 0.4.

In some embodiments, the first wall 21 is provided with a groove 21a, and the pressure relief mechanism 10 includes a weak portion 10a. A bottom of the groove 21a forms the weak portion 10a. In other words, the weak portion 10a corresponds to a bottom surface of the groove 21a.

The provision of the groove 21a can reduce the strength of the weak portion 10a, allowing the weak portion 10a to break open in a timely manner when the battery cell 6 undergoes thermal runaway. The forming method of the groove 21a is simple. Forming the weak portion 10a by providing the groove 21a can simplify the forming process of the pressure relief mechanism 10.

In some embodiments, an angle α surrounded by the weak portion 10a is 180° to 360°.

The weak portion 10a may be annular or semi-annular.

In some examples, the weak portion 10a is annular, that is, α is 360°.

In other examples, the weak portion 10a is semi-annular. α is a central angle corresponding to two ends of the weak portion 10a on a circumscribed circle of the weak portion 10a.

For example, α is 180°, 210°, 240°, 270°, 300°, 330°, or 360°.

In the embodiments of this application, the weak portion 10a may be an annular structure or a semi-annular structure. When the weak portion 10a breaks, a region surrounded by the weak portion 10a can be used for pressure relief. Setting α to 180° to 360° can increase a pressure relief area and improve the pressure relief velocity.

In some embodiments, the battery cell 6 further includes an electrode terminal 30, where the electrode terminal 30 is mounted in a region of the first wall 21 surrounded by the weak portion 10a.

The electrode terminal 30 may be configured to electrically connect the electrode assembly to an external circuit of the battery cell 6 so as to enable charging and discharging of the electrode assembly.

When the battery cell 6 undergoes thermal runaway, the weak portion 10a breaks, and a region of the first wall 21 surrounded by the weak portion 10a flips or is ejected under the impact of high-temperature and high-pressure substances, thereby driving the electrode terminal 30 to move, disconnecting an electrical connection between the electrode terminal 30 and the electrode assembly, cutting off a circuit, and mitigating the thermal runaway of the battery cell 6.

In some embodiments, the first wall 21 includes two first edges 211 disposed opposite each other along the second direction Y. In the second direction Y, a minimum distance between the side surface 232 of the recess and a first edge 211 adjacent thereto is L1, a maximum distance between an end of the pressure relief mechanism 10 away from the first edge 211 adjacent thereto and the first edge 211 is L2, and L2/L1 ≥ 0.6.

In the second direction Y, a distance between the recess 23 and one first edge 211 is greater than a distance between the recess 23 and the other first edge 211. The first edge 211 adjacent to the recess 23 refers to the first edge 211 with a small distance from the recess 23. L1 may be a minimum distance between the first edge 211 adjacent to the recess 23 and the side surface 232 of the recess in the second direction Y.

In the second direction Y, a distance between the pressure relief mechanism 10 and one first edge 211 is greater than a distance between the pressure relief mechanism 10 and the other first edge 211. The first edge 211 adjacent to the pressure relief mechanism 10 refers to the first edge 211 with a small distance from the pressure relief mechanism 10. L2 may be a maximum distance between the first edge 211 adjacent to the pressure relief mechanism 10 and an end of the pressure relief mechanism 10 away from the first edge 211 in the second direction Y.

In the embodiments of this application, limiting the value of L2/L1 to be greater than or equal to 0.6 can balance the pressure relief velocity and space utilization of the battery cell 6.

For example, a smaller value of L2/L1 leads to a smaller L2 or a larger L1. A smaller L2 leads to a smaller pressure relief area of the battery cell 6. If L2 is too small, the battery cell 6 has an insufficient pressure relief velocity. A larger L1 leads to a larger dimension of the recess 23, a smaller internal space of the battery cell 6, and a smaller capacity of the battery cell 6. If L1 is too large, in the battery cell 6 has low space utilization and energy density. In the embodiments of this application, limiting the value of L2/L1 to be greater than or equal to 0.6 can balance the pressure relief velocity and space utilization of the battery cell 6.

Optionally, the value of L2/L1 is 0.6, 0.7, 0.8, or 0.9.

In some embodiments, L2/L1 ≥ 0.8.

In some embodiments, the first wall 21 includes two second edges 212 disposed opposite each other along the third direction Z, where the first direction X, the second direction Y, and the third direction Z are perpendicular to each other. In the third direction Z, a minimum distance S3 between the pressure relief mechanism 10 and the second edge 212 is 2 mm to 10 mm.

The embodiments of this application can reduce the risk of failure of the pressure relief mechanism 10 during normal operation of the battery cell 6 and reduce the loss of the pressure relief area of the battery cell 6.

For example, a smaller S3 indicates that the pressure relief mechanism 10 is closer to the second edge 212. When the second edge 212 is subjected to external impact, the impact force transmitted to the pressure relief mechanism 10 is greater, making the pressure relief mechanism 10 more prone to damage and failure. A larger S3 leads to a smaller dimension of the pressure relief mechanism 10 in the third direction Z and a smaller pressure relief area when the pressure relief mechanism 10 is actuated. In the embodiments of this application, limiting S3 to 2 mm to 10 mm can reduce the risk of failure of the pressure relief mechanism 10 during normal operation of the battery cell 6 and reduce the loss of the pressure relief area of the battery cell 6.

Optionally, S3 is 2 mm, 3 mm, 5 mm, 8 mm, or 10 mm.

In some embodiments, the weak portion 10a includes a first linear segment 11, a second linear segment 12, and an arcuate segment 13 connected between the first linear segment 11 and the second linear segment 12.

The number of first linear segments 11, the number of second linear segments 12, and the number of arcuate segments 13 are not limited in this application.

Providing the arcuate segment 13 enables a smooth transition between the first linear segment 11 and the second linear segment 12, reducing stress concentration and reducing the risk of the weak portion 10a breaking and failing during normal operation of the battery cell 6.

In some embodiments, a minimum distance between the arcuate segment 13 and an edge of the first wall 21 is D1, a minimum distance between the first linear segment 11 and the edge of the first wall 21 is D2, and D1 ≥ D2.

The edge of the first wall 21 includes two first edges 211 and two second edges 212.

For example, D1 may be a minimum distance between a projection of the arcuate segment 13 along the first direction X and a projection of the edge of the first wall 21 along the first direction X. D2 may be a minimum distance between a projection of the first linear segment 11 along the first direction X and the projection of the edge of the first wall 21 along the first direction X.

Compared to the first linear segment 11, the arcuate segment 13 is more prone to damage when subjected to impact forces. In the embodiments of this application, setting D1 to be greater than or equal to D2 allows for a large distance between the arcuate segment 13 and the edge of the first wall 21, thereby reducing the risk of the arcuate segment 13 breaking and failing when the edge of the first wall 21 is subjected to external impact.

In some embodiments, D1 > D2.

In some embodiments, a minimum distance between the second linear segment 12 and the edge of the first wall 21 is D3, and D1 ≥ D3.

D3 may be a minimum distance between a projection of the second linear segment 12 along the first direction X and the projection of the edge of the first wall 21 along the first direction X. Optionally, D3 is equal to S3.

Compared to the second linear segment 12, the arcuate segment 13 is more prone to damage when subjected to impact forces. In the embodiments of this application, setting D1 to be greater than or equal to D3 allows for a large distance between the arcuate segment 13 and the edge of the first wall 21, thereby reducing the risk of the arcuate segment 13 breaking and failing when the edge of the first wall 21 is subjected to external impact.

In some embodiments, the first wall 21 includes a first edge 211 extending along the third direction Z, a second edge 212 extending along the second direction Y, and an arcuate edge 213 connecting the first edge 211 and the second edge 212, where the first direction X, the second direction Y, and the third direction Z are perpendicular to each other. The first linear segment 11 is parallel to the first edge 211, the second linear segment 12 is parallel to the second edge 212, and the arcuate segment 13 is opposite the arcuate edge 213. A minimum distance between the arcuate segment 13 and the arcuate edge 213 is greater than or equal to a distance between the first linear segment 11 and the first edge 211.

The arcuate edge 213 is located at a corner of the housing 20, making it more susceptible to external impact. In the embodiments of this application, a large distance is present between the arcuate segment 13 and the arcuate edge 213, thereby reducing the risk of the arcuate segment 13 breaking and failing when the arcuate edge 213 is subjected to external impact, and improving reliability.

In some embodiments, the minimum distance between the arcuate segment 13 and the arcuate edge 213 is greater than or equal to a distance between the second linear segment 12 and the second edge 212.

For example, a minimum distance between the projection of the arcuate segment 13 along the first direction X and a projection of the arcuate edge 213 along the first direction X may be D1. In the second direction Y, a distance between the first linear segment 11 and the first edge 211 may be D2. In the third direction Z, a distance between the second linear segment 12 and the second edge 212 may be D3.

In some embodiments, a length of the first edge 211 extending along the third direction Z is less than a length of the second edge 212 extending along the second direction Y.

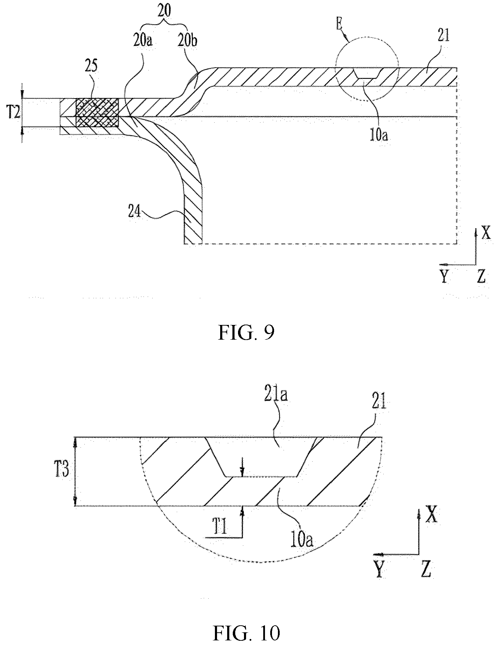

FIG. 9 is an enlarged schematic view at box D in FIG. 8. FIG. 10 is an enlarged schematic view at circle E in FIG. 9.

Referring to FIG. 6 to FIG. 10 together, in some embodiments, the housing 20 includes a housing body 20a and an end cap 20b, where the housing body 20a has an opening, and the end cap 20b is configured to cover the opening. The end cap 20b is the first wall 21, and the housing body 20a includes the second wall 22. The end cap 20b is welded to the housing body 20a to form a weld portion 25.

Welding provides high connection strength and is a simple process that is easy to implement.

In some embodiments, the pressure relief mechanism 10 includes a weak portion 10a. The weld portion 25 surrounds the weak portion 10a, and a minimum distance S4 between the weak portion 10a and the weld portion 25 is 0.5 mm to 5 mm.

During welding of the housing body 20a and the end cap 20b, the heat generated by welding is transferred to the weak portion 10a, causing the weak portion 10a to be affected by thermal stress. The embodiments of this application can reduce the thermal stress transferred to the weak portion 10a, reducing the risk of premature breakage and failure of the weak portion 10a.

For example, a smaller S4 leads to a greater thermal stress on the weak portion 10a, causing the weak portion 10a more likely to break and fail prematurely. If S4 is too small, the weak portion 10a may break due to internal pressure changes during normal operation of the battery cell 6, causing failure of the pressure relief mechanism 10.

During the charging and discharging process of the battery cell 6, pressure changes occur inside the battery cell 6. When the internal pressure of the battery cell 6 increases, the first wall 21 may bulge and deform. When the internal pressure of the battery cell 6 decreases, the first wall 21 may contract and deform. In other words, as the internal pressure of the battery cell 6 changes, the first wall 21 undergoes multiple deformations; and the first wall 21 undergoes a greater deformation at a position closer to the center of the first wall 21. Accordingly, a larger S4 indicates that the weak portion 10a is closer to the center of the first wall 21, making the weak portion 10a more prone to fatigue with the deformation of the first wall 21. If S4 is too large, the weak portion 10a may break during normal operation of the battery cell 6, leading to failure of the pressure relief mechanism 10. In the embodiments of this application, limiting S4 to be 0.5 mm to 5 mm reduces the risk of premature breakage and failure of the weak portion 10a.

Optionally, S4 is 0.5 mm, 0.8 mm, 1 mm, 1.2 mm, 1.5 mm, 1.8 mm, 2 mm, 2.5 mm, 3 mm, 3.5 mm, 4 mm, 4.5 mm, or 5 mm.

In some embodiments, the weak portion 10a includes a first linear segment 11, a second linear segment 12, and an arcuate segment 13 connected between the first linear segment 11 and the second linear segment 12. A minimum distance between the arcuate segment 13 and the weld portion 25 is D4, a minimum distance between the first linear segment 11 and the weld portion 25 is D5, and D4 ≥ D5.

For example, D4 may be a minimum distance between a projection of the arcuate segment 13 along the first direction X and a projection of the weld portion 25 along the first direction X. D5 may be a minimum distance between a projection of the first linear segment 11 along the first direction X and a projection of the weld portion 25 along the first direction X.

Compared to the first linear segment 11, the arcuate segment 13 is more prone to fatigue damage under thermal stress. In the embodiments of this application, setting D4 to be greater than or equal to D5 allows for a large distance between the arcuate segment 13 and the weld portion 25, thereby reducing the risk of the arcuate segment 13 breaking and failing under thermal stress.

In some embodiments, D4 > D5.

In some embodiments, a minimum distance between the second linear segment 12 and the weld portion 25 is D6, and D4 ≥ D6.

D6 may be a minimum distance between a projection of the second linear segment 12 along the first direction X and a projection of the weld portion 25 along the first direction X.

Compared to the second linear segment 12, the arcuate segment 13 is more prone to fatigue damage under thermal stress. In the embodiments of this application, setting D4 to be greater than or equal to D6 allows for a large distance between the arcuate segment 13 and the weld portion 25, thereby reducing the risk of the arcuate segment 13 breaking and failing under thermal stress.

In some embodiments, D4 > D6.

In some embodiments, the weld portion 25 includes a first weld segment 251 extending along the third direction Z, a second weld segment 252 extending along the second direction Y, and an arcuate weld segment 253 connecting the first weld segment 251 and the second weld segment 252, and the first direction X, the second direction Y, and the third direction Z are perpendicular to each other. The first linear segment 11 is parallel to the first weld segment 251, the second linear segment 12 is parallel to the second weld segment 252, and the arcuate segment 13 is opposite the arcuate weld segment 253. A minimum distance between the arcuate segment 13 and the arcuate weld segment 253 is greater than or equal to a minimum distance between the first linear segment 11 and the first weld segment 251.

The arcuate segment 13 is more prone to fatigue damage under thermal stress. In the embodiments of this application, a large distance is present between the arcuate segment 13 and the arcuate weld segment 253, thereby reducing the risk of the arcuate segment 13 breaking and failing under thermal stress.

In some embodiments, the minimum distance between the arcuate segment 13 and the arcuate weld segment 253 is greater than or equal to a minimum distance between the second linear segment 12 and the second weld segment 252.

For example, a minimum distance between the projection of the arcuate segment 13 along the first direction X and a projection of the arcuate weld segment 253 along the first direction X may be D4. In the second direction Y, a distance between the first linear segment 11 and the first weld segment 251 may be D5. In the third direction Z, a distance between the second linear segment 12 and the second weld segment 252 may be D6. Optionally, D5 is equal to S4.

In some embodiments, a length of the first weld segment 251 extending along the third direction Z is less than a length of the second weld segment 252 extending along the second direction Y.

In some embodiments, D4 is 1 mm to 4 mm. Optionally, D4 is 2 mm to 3 mm. For example, D4 is 1 mm, 1.2 mm, 1.5 mm, 2 mm, 2.2 mm, 2.5 mm, 2.8 mm, 3 mm, 3.5 mm, or 4 mm.

In the embodiments of this application, a large distance is present between the arcuate segment 13 and the weld portion 25, thereby reducing the risk of the arcuate segment 13 breaking and failing under thermal stress.

In some embodiments, D5 is 0.8 mm to 4 mm. Optionally, D5 is 1 mm to 2.5 mm. For example, D5 is 0.8 mm, 1 mm, 1.2 mm, 1.5 mm, 1.8 mm, 2 mm, 2.2 mm, 2.5 mm, 2.8 mm, 3 mm, 3.5 mm, or 4 mm.

In the embodiments of this application, a large distance is present between the first linear segment 11 and the weld portion 25, thereby reducing the risk of the first linear segment 11 breaking and failing under thermal stress.

In some embodiments, D6 is 0.8 mm to 4 mm. Optionally, D6 is 1 mm to 2.5 mm. For example, D6 is 0.8 mm, 1 mm, 1.2 mm, 1.5 mm, 1.8 mm, 2 mm, 2.2 mm, 2.5 mm, 2.8 mm, 3 mm, 3.5 mm, or 4 mm.

In some embodiments, the pressure relief mechanism 10 includes a weak portion 10a. A thickness of the weak portion 10a is T1, a weld depth of the weld portion 25 is T2, and T1 and T2 satisfy: 0.05 ≤ T1/T2 ≤ 0.3. For example, T1 is a minimum thickness of the weak portion 10a, and T2 is a minimum weld depth of the weld portion 25.

In the embodiments of this application, during thermal runaway of the battery cell 6, the weak portion 10a breaks before the weld portion 25, achieving directional pressure relief of the battery cell 6, reducing the risk of separation of the housing body 20a and the end cap 20b, and ensuring that the strength of the weak portion 10a meets design requirements, thereby reducing the risk of the weak portion 10a breaking during normal operation of the battery cell 6.

For example, a smaller value of T1/T2 leads to a smaller T1 or a larger T2. If T1 is too small, the strength of the weak portion 10a is low, and the weak portion 10a is prone to breaking when the battery cell 6 is subjected to external impact. If T2 is too large, more heat is generated during welding, and the thermal stress transmitted to the weak portion 10a is greater, making the weak portion 10a prone to breaking when the battery cell 6 is subjected to external impact. In the embodiments of this application, setting T1/T2 ≥ 0.05 reduces the risk of the weak portion 10a breaking during normal operation of the battery cell 6.

For example, a larger value of T1/T2 leads to a larger T1 or a smaller T2. If T1 is too large, the strength of the weak portion 10a is high, and during thermal runaway of the battery cell 6, the weak portion 10a may be difficult to break in a timely manner, causing safety hazards. If T2 is too small, the connection strength between the housing body 20a and the end cap 20b is low, and during thermal runaway of the battery cell 6, the housing body 20a and the end cap 20b may separate before the weak portion 10a breaks, causing the battery cell 6 to fail to achieve directional pressure relief and leading to safety hazards. In the embodiments of this application, setting T1/T2 ≤ 0.3 can ensure that the weak portion 10a breaks before the weld portion 25, achieving directional pressure relief of the battery cell 6, reducing the risk of separation of the housing body 20a and the end cap 20b, and ensuring that the strength of the weak portion 10a meets design requirements, thereby enabling timely pressure relief.

In some embodiments, the value of T1/T2 is 0.05, 0.1, 0.15, 0.2, 0.25, or 0.3.

In some embodiments, T1 is 0.03 mm to 0.2 mm. Optionally, T1 is 0.03 mm, 0.05 mm, 0.08 mm, 0.1 mm, 0.12 mm, 0.15 mm, 0.18 mm, or 0.2 mm.

In some embodiments, T2 is 0.4 mm to 0.7 mm. Optionally, T2 is 0.4 mm, 0.5 mm, 0.6 mm, or 0.7 mm.

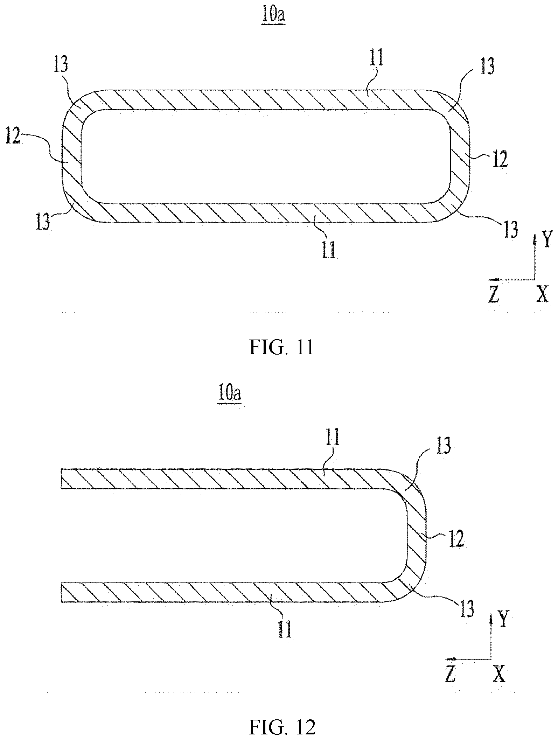

FIG. 11 is a simplified schematic diagram of a weak portion of a pressure relief mechanism of a battery cell according to some embodiments of this application. FIG. 12 is a simplified schematic diagram of a weak portion of a pressure relief mechanism of a battery cell according to some other embodiments of this application.

As shown in FIG. 11 and FIG. 12, in some embodiments, two first linear segments 11 are provided, the two first linear segments 11 are spaced apart along the second direction Y, and two ends of the second linear segment 12 along the second direction Y are respectively connected to the two first linear segments 11 through two arcuate segments 13.

In the embodiments of this application, the weak portion 10a encloses a roughly rectangular region. When the battery cell 6 undergoes thermal runaway, the weak portion 10a breaks to form a roughly rectangular pressure relief opening on the housing of the battery cell, thereby relieving pressure in a timely manner.

As shown in FIG. 11, in some embodiments, the weak portion 10a is annular and includes two first linear segments 11, two second linear segments 12, and four arcuate segments 13. In a circumferential direction of the weak portion 10a, adjacent first linear segments 11 and second linear segments 12 are connected by the arcuate segments 13.

When the battery cell 6 undergoes thermal runaway, the weak portion 10a breaks, and a portion of the first wall 21 surrounded by the weak portion 10a detaches from the battery cell, thereby reducing obstruction to high-temperature and high-pressure substances and relieving pressure in a timely manner.

As shown in FIG. 12, in some embodiments, the weak portion 10a includes two first linear segments 11, one second linear segment 12, and two arcuate segments 13.

When the battery cell undergoes thermal runaway, the weak portion 10a breaks, and a portion of the first wall 21 surrounded by the weak portion 10a flips to form a pressure relief opening, thereby relieving pressure in a timely manner. The portion of the first wall 21 surrounded by the weak portion 10a does not detach from the battery cell, thereby reducing the risk of the portion surrounded by the weak portion 10a cutting other components.

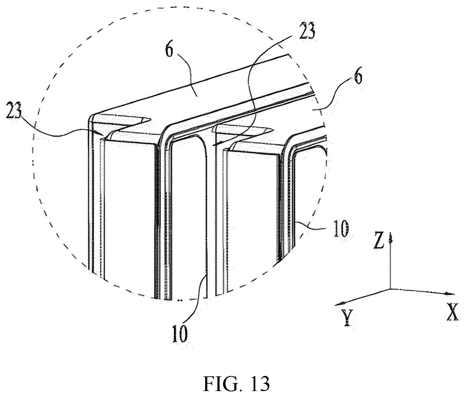

FIG. 13 is an enlarged schematic view at circle F of the battery shown in FIG. 3.

Referring to FIG. 3 and FIG. 13, an embodiment of this application further provides a battery 2 including a plurality of battery cells 6 according to any one of the foregoing embodiments. The plurality of battery cells 6 are arranged along the first direction X. In the first direction X, the pressure relief mechanism 10 is opposite the recess 23 of a battery cell 6 adjacent thereto.

The recess 23 of a battery cell 6 can avoid the pressure relief mechanism 10 of a battery cell 6 adjacent thereto, allowing some of high-temperature and high-pressure substances released by the pressure relief mechanism 10 to enter the recess 23 and be released outward through the recess 23, thereby reducing obstruction to the high-temperature and high-pressure substances by the battery cell 6, enabling the battery cell 6 to relieve pressure in a timely manner, improving reliability, and reducing safety risks.

In some embodiments, at least a portion of the electrode terminal 30 is accommodated in the recess 23 of a battery cell 6 adjacent thereto. In the embodiments of this application, the recess 23 can be used for accommodating the electrode terminal 30, thereby improving space utilization and the energy density of the battery.

In some embodiments, the battery 2 further includes a busbar component 7, where the busbar component 7 is electrically connected to the electrode terminal 30. For example, a plurality of busbar components 7 can connect a plurality of battery cells 6 in series, parallel, or series-parallel.

In some examples, at least a portion of the busbar component 7 is accommodated in the recess 23. In the embodiments of this application, the recess 23 can be used for accommodating the busbar component 7, thereby improving space utilization and the energy density of the battery.

According to some embodiments of this application, an electric apparatus is further provided and includes a battery cell according to any one of the foregoing embodiments, where the battery cell is configured to supply electrical energy to the electric apparatus. The electric apparatus may be any one of the foregoing devices or systems using a battery cell.

Referring to FIG. 4 to FIG. 10, according to some embodiments of this application, a battery cell 6 is provided and includes a housing 20 and a pressure relief mechanism 10. The housing 20 includes a housing body 20a and an end cap 20b, where the housing body 20a has an opening, and the end cap 20b is configured to cover the opening. The end cap 20b is welded to the housing body 20a to form a weld portion 25. The housing body 20a includes a second wall 22 disposed opposite the end cap 20b along a first direction X. The housing body 20a is provided with a recess 23, where the recess 23 is recessed relative to a surface of the second wall 22 facing away from the end cap 20b. The end cap 20b and the pressure relief mechanism 10 are integrally formed, the end cap 20b is provided with a groove 21a, and a bottom of the groove 21a forms a weak portion 10a. The pressure relief mechanism 10 includes the weak portion 10a. A projection of the weak portion 10a along the first direction X is located within a projection of a bottom surface 231 of the recess along the first direction X.

It should be noted that, without conflict, the embodiments and features in the embodiments in this application may be combined with each other.

In conclusion, it should be noted that the foregoing embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. All such modifications and equivalent replacements shall fall within the scope of the claims and specification of this application.

## Claims

1. A battery cell, comprising:
a housing having a first wall and a second wall disposed opposite each other along a first direction, wherein the housing is provided with a recess, the recess being recessed relative to a surface of the second wall facing away from the first wall; and
a pressure relief mechanism disposed on the first wall, wherein a projection of the pressure relief mechanism along the first direction at least partially overlaps a projection of the recess along the first direction.

2. The battery cell according to claim 1, wherein the projection of the pressure relief mechanism along the first direction does not overlap a projection of the second wall along the first direction.

3. The battery cell according to claim 2, wherein a minimum distance between the projection of the pressure relief mechanism along the first direction and the projection of the second wall along the first direction is greater than or equal to 0.5 mm.

4. The battery cell according to claim 2 or 3, wherein the projection of the pressure relief mechanism along the first direction is located within a projection of a bottom surface of the recess along the first direction.

5. The battery cell according to any one of claims 1 to 4, wherein the recess is provided on at least one side of the second wall along a second direction, the second direction being perpendicular to the first direction.

6. The battery cell according to claim 5, wherein in the second direction, a minimum distance between a projection of the pressure relief mechanism on the bottom surface of the recess and a side surface of the recess is greater than or equal to 1 mm.

7. The battery cell according to claim 5 or 6, wherein the first wall comprises two first edges disposed opposite each other along the second direction; and
in the second direction, a minimum distance between the side surface of the recess and the first edge adjacent thereto is L1, a maximum distance between an end of the pressure relief mechanism away from the first edge adjacent thereto and the first edge is L2, and L2/L1 ≥ 0.6.

8. The battery cell according to any one of claims 5 to 7, wherein the recess extends through the housing along a third direction; and the first direction, the second direction, and the third direction are perpendicular to each other.

9. The battery cell according to any one of claims 5 to 8, wherein
the first wall comprises two second edges disposed opposite each other along a third direction, and the first direction, the second direction, and the third direction are perpendicular to each other; and
in the third direction, a minimum distance between the pressure relief mechanism and the second edge is 2 mm to 10 mm.

10. The battery cell according to any one of claims 1 to 9, wherein a dimension of the housing along a second direction is greater than a dimension of the housing along a third direction, and the dimension of the housing along the third direction is greater than a dimension of the housing along the first direction; and
the first direction, the second direction, and the third direction are perpendicular to each other.

11. The battery cell according to any one of claims 1 to 10, wherein two recesses are provided, the two recesses are respectively located on two sides of the second wall along a second direction, and the second direction is perpendicular to the first direction; and
two pressure relief mechanisms are provided, and the two pressure relief mechanisms are disposed at two ends of the first wall along the second direction.

12. The battery cell according to any one of claims 1 to 11, wherein the first wall and the pressure relief mechanism are integrally formed, and the pressure relief mechanism comprises a weak portion.

13. The battery cell according to any one of claims 1 to 12, wherein the pressure relief mechanism comprises a weak portion, and a ratio of a thickness of the weak portion to a thickness of the first wall is 0.1 to 0.4.

14. The battery cell according to any one of claims 1 to 13, wherein the first wall is provided with a groove, and the pressure relief mechanism comprises a weak portion; and
a bottom of the groove forms the weak portion.

15. The battery cell according to any one of claims 12 to 14, wherein an angle surrounded by the weak portion is 180° to 360°.

16. The battery cell according to any one of claims 12 to 15, further comprising an electrode terminal, wherein the electrode terminal is mounted in a region of the first wall surrounded by the weak portion.

17. The battery cell according to any one of claims 12 to 16, wherein the weak portion comprises a first linear segment, a second linear segment, and an arcuate segment connected between the first linear segment and the second linear segment.

18. The battery cell according to claim 17, wherein a minimum distance between the arcuate segment and an edge of the first wall is D1, a minimum distance between the first linear segment and the edge of the first wall is D2, and D1 ≥ D2.

19. The battery cell according to claim 18, wherein a minimum distance between the second linear segment and the edge of the first wall is D3, and D1 ≥ D3.

20. The battery cell according to claim 18 or 19, wherein the first wall comprises a first edge extending along a third direction, a second edge extending along a second direction, and an arcuate edge connecting the first edge and the second edge, and the first direction, the second direction, and the third direction are perpendicular to each other;
the first linear segment is parallel to the first edge, the second linear segment is parallel to the second edge, and the arcuate segment is opposite the arcuate edge; and
a minimum distance between the arcuate segment and the arcuate edge is greater than or equal to a distance between the first linear segment and the first edge.

21. The battery cell according to claim 20, wherein two first linear segments are provided, the two first linear segments are spaced apart along the second direction, and two ends of the second linear segment along the second direction are respectively connected to the two first linear segments through two arcuate segments.

22. The battery cell according to claim 21, wherein the weak portion is annular and comprises two first linear segments, two second linear segments, and four arcuate segments; and
in a circumferential direction of the weak portion, adjacent first linear segments and second linear segments are connected by the arcuate segments.

23. The battery cell according to any one of claims 1 to 22, wherein the housing comprises a housing body and an end cap, the housing body has an opening, and the end cap is configured to cover the opening; and
the end cap is the first wall, the housing body comprises the second wall, and the end cap is welded to the housing body to form a weld portion.

24. The battery cell according to claim 23, wherein
the pressure relief mechanism comprises a weak portion; and
the weld portion surrounds the weak portion, and a minimum distance between the weak portion and the weld portion is 0.5 mm to 5 mm.

25. The battery cell according to claim 24, wherein
the weak portion comprises a first linear segment, a second linear segment, and an arcuate segment connected between the first linear segment and the second linear segment; and
a minimum distance between the arcuate segment and the weld portion is D4, a minimum distance between the first linear segment and the weld portion is D5, and D4 ≥ D5.

26. The battery cell according to claim 25, wherein a minimum distance between the second linear segment and the weld portion is D6, and D4 ≥ D6.

27. The battery cell according to claim 25 or 26, wherein
the weld portion comprises a first weld segment extending along a third direction, a second weld segment extending along a second direction, and an arcuate weld segment connecting the first weld segment and the second weld segment, and the first direction, the second direction, and the third direction are perpendicular to each other;
the first linear segment is parallel to the first weld segment, the second linear segment is parallel to the second weld segment, and the arcuate segment is opposite the arcuate weld segment; and
a minimum distance between the arcuate segment and the arcuate weld segment is greater than or equal to a minimum distance between the first linear segment and the first weld segment.

28. The battery cell according to any one of claims 25 to 27, wherein D4 is 1 mm to 4 mm; and optionally, D4 is 2 mm to 3 mm.

29. The battery cell according to any one of claims 25 to 28, wherein D5 is 0.8 mm to 4 mm; and optionally, D5 is 1 mm to 2.5 mm.

30. The battery cell according to any one of claims 23 to 29, wherein the pressure relief mechanism comprises a weak portion; and a thickness of the weak portion is T1, a weld depth of the weld portion is T2, and T1 and T2 satisfy: 0.05 ≤ T1/T2 ≤ 0.3.

31. A battery, comprising a plurality of battery cells according to any one of claims 1 to 30,
wherein the plurality of battery cells are arranged along the first direction; and in the first direction, the pressure relief mechanism is opposite the recess of a battery cell adjacent thereto.

32. An electric apparatus, comprising the battery cell according to any one of claims 1 to 30, wherein the battery cell is configured to supply electrical energy.
